# EUROPÄISCHE PATENTANMELDUNG

(11) **EP 2 360 394 A2**
(43) Veröffentlichungstag der Anmeldung: **24.08.2011**
(21) Anmeldenummer: 11001105.3
(22) Anmeldetag: 11.02.2011
(51) Int. Cl.: F16H 25/06, F16H 49/00

(54) **Spannungswellengetriebe**

(30) Priorität: 18.03.2010 DE 102010011951; 12.02.2010 DE 102010007927
(71) Anmelder: Wittenstein AG, 97999 Igersheim (DE)
(72) Erfinder: Bayer, Thomas, 97999 Igersheim (DE)
(74) Vertreter: Arat, Dogan

(57) **Zusammenfassung**

Getriebe, insbesondere verspannbares Getriebe, mit einem Hohlkörper (1), einer ersten Antriebswelle (3), die zumindest teilweise innerhalb des Hohlkörpers (1) angeordnet ist und mit dem Hohlkörper (1) in Wirkverbindung steht, und einer zweiten Antriebswelle (4), die zumindest teilweise innerhalb des Hohlkörpers (1) angeordnet ist und mit dem Hohlkörper (1) in Wirkverbindung steht.

## Beschreibung

Die Anmeldung betrifft ein Getriebe nach dem Oberbegriff des Anspruchs 1 und ein Verfahren nach dem nebengeordneten Verfahrensanspruch.

### Stand der Technik

Aus dem Stand der Technik ist es bekannt, so genannte verspannte Getriebe zu verwenden, um ein möglichst geringes Spiel zu erhalten. So schlägt die DE 603 01 648 T2 vor, mehrere Antriebe auf ein Abtriebselement wirken zu lassen. Die Antriebswellen der Antriebe können miteinander gekoppelt und gegeneinander verspannt werden, um ein geringes Spiel am Abtrieb zu erreichen. Die aus dieser Patentschrift bekannte Anordnung ist allerdings vergleichsweise groß und schwer, sodass bei einigen Anwendungen unter Umständen Einbauprobleme entstehen könnten.

### Offenbarung der Erfindung

Aufgabe der Erfindung ist es, aus dem Stand der Technik bekannte Getriebe zu verbessern, insbesondere ist es Aufgabe der Erfindung, ein verspanntes Getriebe mit geringem Spiel, hoher Steifigkeit und kompakter Bauform anzugeben. Idealerweise ist ein erfindungsgemäßes Getriebe auch in der Lage, hohe Drehmomente zu übertragen.

Die Aufgabe wird mit einem Getriebe mit den Merkmalen des Anspruchs 1 gelöst. Unabhängiger Gegenstand der Erfindung ist auch ein Verfahren zum Betreiben eines solchen Getriebes. Erfindungsgemäße Antriebe nach den untergeordneten Ansprüchen umfassen ein erfindungsgemäßes Getriebe.

Das erfindungsgemässe Getriebe sieht vor, dass zwei Antriebswellen jeweils zumindest teilweise innerhalb eines Hohlkörpers oder einer Hohlwelle angeordnet sind und jeweils mit dem Hohlkörper oder der Hohlwelle in Wirkverbindung stehen. Der Hohlkörper ist vorzugsweise kreisrund und umfasst vorteilhafterweise zumindest einen Innenzahnkranz. Der Hohlkörper ist bei typischen Ausführungsformen als Hohlwelle oder Hohlrad ausgebildet. Dabei ist der Begriff Hohlwelle in dieser Anmeldung vorzugsweise allgemein dahingehend zu verstehen, dass die Hohlwelle auch feststehend mit dem Gehäuse verbunden sein kann oder selbst das Gehäuse bildet. Es sollte angemerkt werden, dass von dem Begriff Hohlwelle auch Hohlräder umfasst sind, die als kurze Hohlwelle betrachtet werden können. Ein Hohlrad, das zwei Zahnkränze oder zwei Antriebswellen miteinander in Wirkverbindung setzt, wird hierin als Hohlwelle bezeichnet. Die Hohlwelle ist vorzugsweise feststehend an einem Gehäuse fixiert oder bildet selbst das Gehäuse. Über die Wirkverbindung mit der Hohlwelle ist eine Verspannung der zwei Antriebswellen möglich, sodass ein Antrieb mit einem geringen Spiel geschaffen werden kann.

Vorzugsweise ist zwischen mindestens einer der zwei Antriebswellen und der Hohlwelle mit Innenverzahnung ein Zahnkranz mit radial beweglichen Zähnen angeordnet. Dieser Zahnkranz mit radialbeweglichen Zähnen stellt dabei die Wirkverbindung zwischen der Hohlwelle und der jeweiligen Antriebswelle her. Für die radial beweglichen Zähne wird vorzugsweise auf Getriebe Bezug genommen, wie sie in der DE 10 2006 042 786 A1 offenbart sind. Hierbei erfolgt eine ausdrückliche Bezugnahme auf die Ausgestaltung des Zahnkranzes mit radial beweglichen Zähnen in den dort offenbarten Ausführungsformen. Durch die Verwendung von radial beweglichen Zähnen lassen sich Getriebe mit extremen Übersetzungs- oder Untersetzungs-Verhältnissen schaffen. Auf diese Weise ist es möglich, ein sehr kompaktes und stark untersetzendes Getriebe, das ausserdem durch eine Verspannung ein sehr geringes Spiel aufweist, zu schaffen.

Vorteilhafterweise werden die zwei Antriebswellen jeweils durch einen Motor angetrieben, wobei die zwei Motoren mit einer Steuerungseinheit verbunden sind. Der Antrieb mit zwei Motoren und einem Getriebe in einer erfindungsgemäßen Ausführung bietet den Vorteil, dass eine Master/Slave-Konfiguration geschaffen werden kann, mit der eine Verspannung des Getriebes möglich ist. Bei der Master/Slave-Konfiguration beziehungsweise dem Master/Slave-Betriebsmodus wird einer der beiden Motoren geringfügig gegenüber dem anderen Motor verzögert betrieben, sodass einer der beiden Motoren antreibt und der andere Motor gegenüber dem Antrieb des ersten Motors zurück bleibt und diesen dadurch bremst. In diesem Betriebsmodus ist ein Verspannen der Antriebswellen möglich, sodass ein geringes Spiel und eine hohe Steifigkeit des Getriebes entsteht. Bei vorteilhaften Ausführungsformen der Erfindung ist es möglich, die beiden Motoren in diesem Betriebsmodus zum Verspannen zu betreiben und ausserdem auch die Motoren in einem anderen Betriebsmodus zu betrieben, bei welchem die beiden Antriebswellen in dieselbe Richtung mit einer möglichst hohen Antriebsgeschwindigkeit und einem möglichst hohen Drehmoment unverspannt betrieben werden, um beispielsweise eine schnelles Anfahren einer Position bei einer Werkzeugmaschine zu ermöglichen.

Weitere bevorzugte Ausführungsformen des Getriebes sind dazu eingerichtet, dass die zwei Antriebswellen jeweils mit einem Motor verbunden werden können, um durch diesen angetrieben zu werden. Dies bietet den Vorteil, dass verschiedene Motoren verwendet werden können und die obigen Vorteile verschiedener Betriebsmodi erreicht werden können.

Vorteilhafterweise sind die radial beweglichen Zähne des Zahnkranzes oder der Zahnkränze durch eine oder jeweils eine mit der Antriebswelle drehfest verbundene Führungseinrichtung bewegbar. Bei einer bevorzugten Ausführungsform der Erfindung ist für jede Antriebswelle jeweils ein Zahnkranz vorgesehen, der oder dessen Zähne jeweils durch eine Führungseinrichtung radial bewegbar sind. Die Führungseinrichtung oder die Führungseinrichtungen sind dabei jeweils so ausgebildet, dass sie einen veränderlichen Außenradius aufweisen. Vorzugsweise ist die Führungseinrichtung als Führungsring ausgebildet. Die Zähne des Zahnkranzes und der Führungsring sind derart angeordnet oder ausgebildet, dass sie bei einer Verdrehung des Führungsrings relativ zu dem Zahnkranz durch den veränderlichen Außenradius des Führungsrings radial bewegt werden. Dabei sind die Ausdrücke Führungsring und Führungseinrichtung allgemein dahingehend zu verstehen, dass auch auf einen innen liegenden Ring aufgesetzte Ellipsoid-Teilkörper oder andere Teilkörper, die einen "Buckel" auf dem innen liegenden Ring ausbilden, darunter zu verstehen sind. Wesentlich ist insbesondere die Aussen-Form des Rings oder Teilrings, welche bewirkt, dass die Zähne in Abhängigkeit der Winkellage der Antriebswelle radial nach außen bewegt werden.

Bei typischen Ausführungsformen der Erfindung werden die Zähne beispielsweise jeweils durch eine Feder belastet gegen den Führungsring gedrückt, sodass der Führungsring die Zähne jeweils nach außen drückt, falls bei einer Drehung des Führungsrings der Radius des Führungsrings an der entsprechenden Stelle grösser wird. Die Feder bewirkt dabei ein Zurückfahren der Zähne bei abnehmendem Radius bei weiterer Drehung. Bei weiteren typischen Ausführungsformen werden die Zähne lediglich durch den Führungsring radial nach außen gedrückt. Dies bietet den Vorteil eines einfachen Aufbaus. Ein Zurückdrücken der Zähne radial nach innen erfolgt über den Kontakt mit der Innenverzahnung Hohlwelle.

Bevorzugte Führungsringe weisen zumindest zwei Maxima des Außenradius auf, bevorzugt gegenüberliegende oder über den Umfang gleich verteilte Maxima. Dies bewirkt, dass eine besonders gleichmäßige Kraftverteilung ohne eine unnötige Momentenbelastung der Antriebswelle um eine Querachse erreicht wird. Wiederum wird ergänzend darauf hingewiesen, dass bei typischen Ausführungsformen der Führungsring mehrteilig ausgestaltet sein kann, beispielsweise durch einen innen liegenden Ring mit Aufsätzen, die als Segmente aufgesetzt sind.

Vorzugsweise sind beide Antriebswellen jeweils mit einem Zahnkranz mit beweglichen Zähnen verbunden, insbesondere über einen Führungsring, wobei beide Zahnkränze mit dem selben Innenzahnkranz der Hohlwelle in Eingriff sind. Dabei ist zu berücksichtigen, dass jeweils nur einzelne Zähne der bewegbaren Zähne der Zahnkränze in Eingriff sind. Dies bietet den Vorteil, dass nur ein Innenzahnkranz bei der Hohlwelle vorgesehen werden muss.

Bei bevorzugten Ausführungsformen der Erfindung sind die beweglichen Zähne in einem Zahnkäfig angeordnet. Besonders bevorzugt wird, dass die beweglichen Zähne von beiden Zahnkränzen in genau einem gemeinsamen Zahnkäfig angeordnet sind. Dies bietet den Vorteil, dass lediglich ein Zahnkäfig vorgesehen werden muss. Ausserdem ist es auf diese Weise möglich, die Antriebswellen über den Zahnkäfig, die Zähne und die Hohlwelle miteinander zu verspannen.

Von dem Ausdruck "bewegliche Zähne" sind vorzugsweise auch nachgiebige Zahnkränze, so genannte Flexsplines, umfasst. Diese bieten den Vorteil eines einfachen Aufbaus. Einzelne, in einem Zahnkäfig oder an einer umlaufenden Kette angeordnete Zähne bieten den Vorteil einer höheren Stabilität, einer höheren Steifigkeit und höherer übertragbarer Momente.

Vorzugsweise sind die Zähne mit einer Abtriebswelle verbunden. Dabei bedeutet verbunden, dass die Zähne in Umfangsrichtung mit der Abtriebswelle zur Übertragung eines Abtriebsdrehmoments verbunden sind. Das bedeutet, dass ein Bewegen der Zähne in Umfangsrichtung oder um einen bestimmten Winkelbetrag um die Längsachse des Getriebes zu einer Drehung der Abtriebswelle um einen entsprechenden Winkelbetrag führt. Bei typischen Ausführungsformen ist der Zahnkäfig zur Drehmomentübertragung mit der Abtriebswelle verbunden.

Vorteilhafterweise ist der Zahnkäfig, in welchem die Zähne radial beweglich angeordnet sind, mit der Abtriebswelle zur Drehmomentübertragung verbunden. Auf diese Weise wird die Drehbewegung des Zahnkäfigs auf die Abtriebswelle übertragen. Mit dem so geschaffenen Getriebe können extreme Übersetzungen erreicht werden.

Vorteilhafterweise ist die erste Antriebswelle zumindest teilweise innerhalb der zweiten Antriebswelle angeordnet. Dies bietet den Vorteil einer äußerst kompakten Bauform. Ausserdem ist es auf diese Weise möglich, von einer Seite des Getriebes den Antrieb zu organisieren und auf der anderen Seite in Axialrichtung den Abtrieb vorzusehen. Bei besonders bevorzugten Ausführungsformen sind die erste und die zweite Antriebswelle hohl ausgeführt, wobei eine innerhalb der anderen teilweise aufgenommen ist. Innerhalb der inneren Antriebswelle können bei dieser Anordnung Kabel durchgeführt werden.

Bei bevorzugten Ausführungsformen der Erfindung ist zumindest einer der Motoren zumindest teilweise innerhalb eines Umfangs der Hohlwelle angeordnet. Vorzugsweise ist zumindest einer der Motoren oder alle Motoren koaxial zu der Hohlwelle angeordnet. Besonders bevorzugt wird, dass die Motoren einen Umfang aufweisen, der gleich oder kleiner ist als der Umfang der Hohlwelle. Bei weiteren bevorzugten Ausführungsformen ist die Hohlwelle Träger von Statorwicklungen der Motoren, wobei die Rotoren der Motoren innerhalb auf den innen liegenden Antriebswellen angeordnet sind und vorteilhafterweise zumindest ein Motor als Hohlwellenmotor ausgeführt ist. Dies bietet den Vorteil einer besonders kompakten Bauform. Vorzugsweise wird die Hohlwelle dabei auch als Gehäuse oder zumindest als inneres Gehäuse verwendet.

Bei weiteren typischen Ausführungsformen der Erfindung ist zumindest einer der Motoren radial außerhalb der Hohlwelle angeordnet. Bei einem Antrieb über

Stirnräder der Antriebswellen oder zumindest einer der Antriebswellen wird ein Getriebe oder Antrieb mit einer sehr geringen axialen Ausdehnung geschaffen.

Vorzugsweise umfasst das Getriebe oder der Antrieb eine Steuereinheit, die mit den beiden Motoren verbunden ist und eingerichtet ist, um die Motoren in einem ersten Betriebsmodus unverspannt zu betreiben und in einem zweiten Betriebsmodus verspannt zu betreiben. Dies bietet den Vorteil, dass in einem ersten Betriebsmodus schnell eine Position angefahren werden kann und in einem zweiten Betriebsmodus wie bei einem verspannten Betrieb ein besonders genaues Bearbeiten oder Positionieren möglich ist, da Fehler aufgrund von Spiel in dem Getriebe vermieden werden.

Der Begriff Motor bezeichnet vorzugsweise einen Elektromotor oder einen Hydraulikmotor, die den Vorteil einer hohen Leistungsdichte bieten. Die Motoren sind vorteilhafterweise allgemein als "Antriebe" zu verstehen, so wird bei typischen Ausführungsformen ein Motor verwendet, welcher über ein Getriebe auf zwei Wellen wirkt und damit zwei Antriebe bereitstellt. Dies bietet den Vorteil, dass nur ein Motor benötigt wird.

### Kurze Beschreibung der Zeichnungen

Bevorzugte Ausführungsbeispiele und besondere Ausgestaltungen der Erfindung werden nachfolgend anhand folgender Figuren näher erläutert.
- Figur 1: zeigt ein erfindungsgemässes erstes Getriebe in einer schematischen Schnittansicht;
- Figur 2: zeigt einen erfindungsgemässen Antrieb mit einem Getriebe nach Figur 1 in einer schematischen Schnittansicht;
- Figur 3: zeigt eine zweite erfindungsgemässe Ausführungsform eines Getriebes in einer schematischen Schnittansicht;

- Figur 4: zeigt einen erfindungsgemässen Antrieb mit einem erfindungsgemässen Getriebe nach Figur 3 in einer schematischen Schnittansicht; und
- Figur 5: zeigt in eine perspektivischen Ansicht schematisch den Antrieb der Figur 4.

### Beschreibung bevorzugter Ausführungsbeispiele

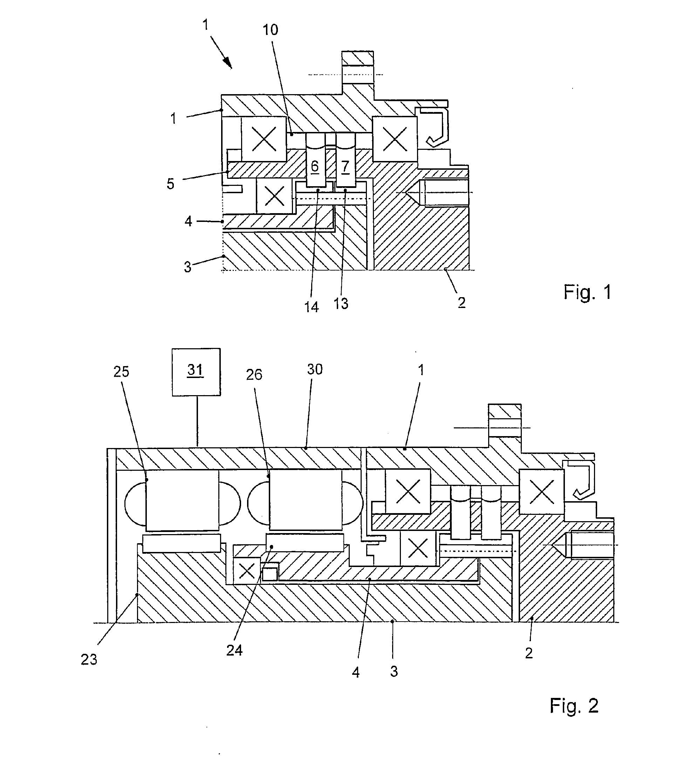

Bei der Beschreibung der Schnittansichten der Figuren 1 bis 4 sollte berücksichtigt werden, dass die jeweiligen Schnittansichten jeweils nur einen Teil des Getriebes oder des Antriebs darstellen, wobei jeweils eine Hälfte im wesentlichen in der Zeichnung weggelassen wurde, da sie entsprechend spiegelverkehrt aufgebaut ist oder keine weiteren Einzelheiten gegenüber der dargestellten Seite aufweist.

In der Figur 1 ist ein erfindungsgemässes Getriebe mit einer Hohlwelle 1 als Hohlkörper, einer Abtriebswelle 2 und einer ersten Antriebswelle 3 und einer zweiten Antriebswelle 4 gezeigt. Die Abtriebswelle 2 ist einstückig mit einem Zahnkäfig 5 ausgeführt, in welchem bewegliche Zähne 6 und 7 von zwei Zahnkränzen angeordnet sind.

Zu dem Zahnkäfig und den Zahnkränzen wird wiederum explizit auf die DE 10 2006 042 786 A1 Bezug genommen. In dieser Anmeldeschrift ist ausführlich offenbart, wie der Zahnkranz mit den beweglichen Zähnen angeordnet ist und bevorzugt ausgeführt ist. Als unterschiedlich gegenüber der genannten Anmeldeschrift ist allerdings zu nennen, dass der Zahnkäfig 5 des bevorzugten Ausführungsbeispiele zwei Zahnkränze mit beweglichen Zähnen 6 und 7 umfasst.

Die beweglichen Zähne 6 und 7 greifen je nach radialer Lage in einen Innenzahnkranz 10 der Hohlwelle 1 ein. Ausserdem verfügt die Hohlwelle 1 noch über einen Befestigungsflansch 11, mit welchem das Getriebe insgesamt befestigt werden kann. Die Hohlwelle 1 ist damit feststehend und wirkt wie ein feststehendes Hohlrad eines Planetengetriebes.

Die beiden Antriebswellen 3 und 4 sind jeweils mit Führungseinrichtungen 13 und 14 verbunden, welche eine radiale Bewegung der Zähne 6 und 7 je nach Winkellage der Wellen 3 und 4 bewirken. Hierzu sind die Führungseinrichtungen 13 und 14 als Führungsringe mit einem veränderlichen Außendurchmesser ausgebildet, wie dies beispielsweise in der Figur 2 der Anmeldung DE 10 2006 042 786 A1 dargestellt ist. Entsprechend ist auch die Antriebsart für die Zähne 6 und 7 zu gestalten. Dabei müssen die Zähne nicht gegen den Außenumfang des Führungsrings 13, 14 gedrückt werden, um sie wieder radial nach innen zu bewegen. So entsteht durch das Hineintreiben von neuen Zähnen in die Innenverzahnung 10 der Hohlwelle 1 ein Drehmoment auf den Zahnkäfig 5, wodurch Zähne an Stellen, an welchen der Umfang der Führungseinrichtung 13, 14 durch die Drehbewegung der Führungseinrichtung 13, 14 wieder kleiner wird, eine rücktreibende Kraft auf die Zähne 6, 7, so dass diese ohne dass weitere Teile notwendig sind, radial nach innen geschoben werden.

Typische Ausführungsformen umfassen einen innenliegenden Ring mit aufgesetzten Ausbuchtungen, so dass ein in Umfangsrichtung veränderlicher Radius geschaffen wird. Auf dieser so gebildeten Umlauffläche rollen vorzugsweise Nadeln oder Walzen ab, entsprechend der Wirkungsweise von Nadellagern oder Walzlagern. Auf den Nadeln ist ein weiterer Ring angeordnet
- vorzugsweise aus elastischem Material oder mehrere Ringsegmente umfassend. Die Außenfläche dieses weiteren, äußeren Rings steht mit den Zähnen in Kontakt und treibt diese gegebenenfalls nach außen. Der äußere Ring nimmt dabei zumindest im wesentlichen die Umlaufgeschwindigkeit der Zähne an, so dass keine oder nur wenig Reibung zwischen den Zähnen und dem äußeren, weiteren Ring entsteht. Ergänzend wird auf die DE 10 2007 019 607 verwiesen, welche Möglichkeiten des Antriebs der Zähne in radialer Richtung offenbart und lehrt.

Eine weitere Möglichkeit, die bei typischen Ausführungsformen der Erfindung verwendet wird, ist eine Lagerung der Zähne mit in Längsrichtung des Getriebes ausgerichteten Stiften in einem Führungsring. Die Stifte greifen in eine umlaufende Nut des Führungsrings mit veränderlichem Radius ein. Auf diese Weise werden die Zähne in radialer Richtung zwangsgeführt. In der Nut oder auf den Führungsringen können die Zähne mit Wälzlagern gelagert sein. Ebenso ist eine Reib-Lagerung möglich.

Durch ein Antreiben der Antriebswellen 3 und 4 mit zwei Motoren, die in einer Master/Slave-Konfiguration geschaltet sind, ist es möglich, das Getriebe verspannt zu betreiben. Dadurch wird erreicht, dass das Spiel des Getriebes minimiert wird und die Steifigkeit erhöht wird. Die Verspannung erfolgt dabei über den Zahnkäfig 5 und durch Abstützung der Zähne an der Innenverzahnung des Hohlkörpers 1.

In einem zweiten Betriebsmodus werden die Antriebswellen 3 und 4 unverspannt durch zwei Motoren angetrieben, sodass das Getriebe unverspannt betrieben wird. Dies ermöglicht eine schnelle Gangart auf der Abtriebswelle 2 und eine hohe Drehmomentübertragung.

In der Figur 2 ist das Getriebe der Figur 1 zusammen mit zwei Antriebsmotoren gezeigt. Bei der Figurenbeschreibung der Figur 2 werden die gleichen Bezugszeichen für gleiche oder ähnliche Teile wie bei der Figur 1 eingesetzt, wobei auf eine nochmalige Beschreibung zum Teil verzichtet wird. Ausserdem sind nicht alle Bezugszeichen der Figur 1 nochmals in der Figur 2 aufgeführt.

Die erste Antriebswelle 3 bildet gleichzeitig einen Rotor 23 eines ersten Elektromotors. Ebenso bildet die zweite Antriebswelle 4 einen Rotor 24 eines zweiten Elektromotors. Die beiden Elektromotoren bilden die Motoren, welche das Getriebe antreiben. Die Elektromotoren verfügen ausserdem über einen ersten Stator 25 und einen zweiten Stator 26, wobei der erste Stator 25 mit dem ersten Rotor 23 der ersten Antriebswelle 3 zusammenwirkt und der zweite Stator 26 mit dem zweiten Rotor 24 der zweiten Antriebswelle 4 zusammenwirkt.

Die Elektromotoren sind koaxial zu dem Getriebe angeordnet. Die Statoren 25 und 26 sind fixiert an einem Gehäuse 30 angeordnet, welches koaxial zu der Hohlwelle 1 angeordnet ist. Ausserdem ist das Gehäuse 30 mit der Hohlwelle 1 fest verbunden. Auf diese Weise wird mit den Motoren und dem Getriebe ein zylinderförmiger Antrieb gebildet.

Die beiden Motoren werden durch eine Steuereinheit 31 angesteuert, welche es ermöglicht, die Motoren in einem ersten Betriebsmodus und einem zweiten Betriebsmodus zu betreiben. Bei typischen Ausführungsformen der Erfindung kann die Steuereinheit 31 weitere Betriebsmodi ansteuern. Der erste Betriebsmodus dient dazu, Positionen schnell anzufahren. Der zweite Betriebsmodus dient dazu, das Getriebe verspannt zu vertreiben um eine Hohe Positioniergenauigkeit zu erreichen. Die hohe Positioniergenauigkeit wird durch eine Minimierung des Spiels des Getriebes erreicht.

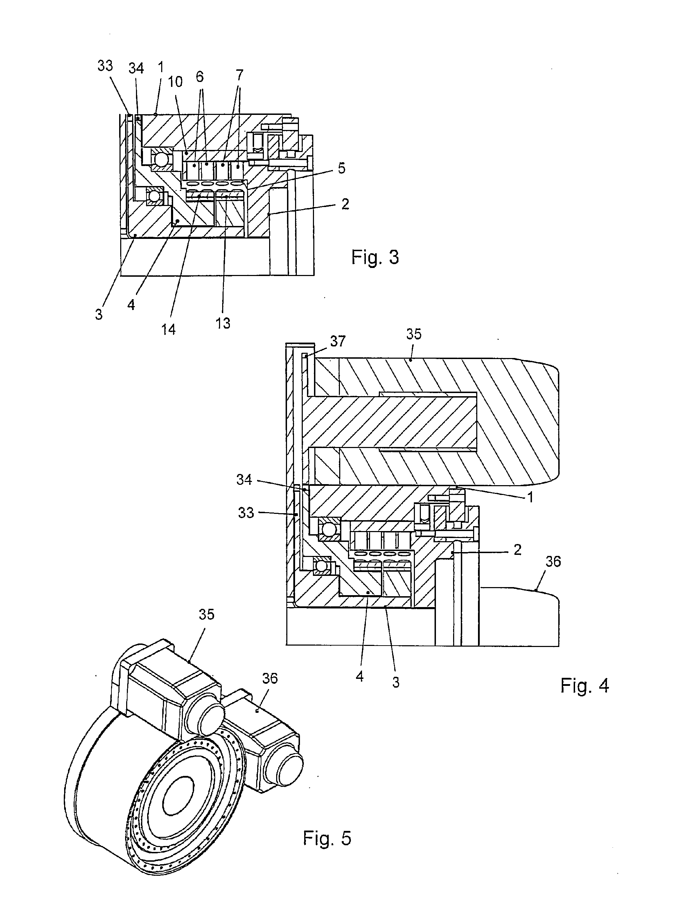

In der Figur 3 ist eine weitere Ausführungsform eines erfindungsgemässen Getriebes schematisch in einer teilweisen Schnittansicht gezeigt. Bei der Beschreibung des Getriebes der Figur 3 werden gleiche Bezugszeichen für gleiche oder ähnliche Teile wie bei dem Getriebe der Figur 1 verwendet.

Der wesentliche Unterschied zu dem Getriebe der Figur 1 ist, dass bei dem Getriebe der Figur 3 ein Antrieb der Antriebswellen 3 und 4 über Stirnräder 33 und 34 erfolgt. Das Stirnrad 33 ist einstückig mit der Antriebswelle 3 und das Stirnrad 34 einstückig mit der Antriebswelle 4 ausgebildet. Dies ermöglicht eine in axialer Richtung sehr kompakte Bauform des Getriebes der Figur 3. Weiterhin ist das Getriebe der Figur 3 für höhere Drehmomente ausgelegt, da es jeweils zwei Zahnkränze für jede der Antriebswellen 3, 4 aufweist, mit axial nebeneinander liegenden Zähnen 6 für die Übertragung des Drehmoments der Antriebswelle 4. Das Drehmoment der Antriebswelle 3 wird über axial nebeneinander liegende Zähne 7 übertragen.

In der Figur 4 ist das Getriebe der Figur 3 nochmals unter Verwendung der gleichen Bezugszeichen für gleiche oder ähnliche Teile gezeigt, wobei in der Figur 4 ein vollständiger Antrieb schematisch in einer teilweisen Schnittansicht unter Verwendung des Getriebes der Figur 3 gezeigt ist.

Der Antrieb der Figur 4 umfasst zwei Elektromotoren 35 und 36. Der Elektromotor 35 treibt mit einem Ritzel 37 das Stirnrad 34 an. Die Elektromotoren 35 und 36 der Figur 4 sind lediglich schematisch angezeigt. Sie sind jedoch ähnlich wie die Elektromotoren der Figur 2 mit Statoren und Rotoren aufgebaut. Der Elektromotor 36 treibt das Stirnrad 33 an, welches mit der ersten Antriebswelle verbunden ist. Wie bei dem Ausführungsbeispiel der Figur 2 ist wiederum eine Steuereinheit mit den oben beschriebenen Funktionen vorgesehen.

In der Figur 5 ist der Antrieb der Figur 4 nochmals in einer perspektivischen Ansicht gezeigt. Es ist zu erkennen, dass der Antrieb der Figur 5 in axialer Richtung sehr kompakt ist. Durch die Möglichkeit, den Antrieb der Figuren 4 und 5 über die in den Figuren 4 und 5 nicht dargestellte Steuereinheit in zumindest zwei Betriebsmodi zu verwenden (siehe oben im Zusammenhang mit Figuren 1 und 2) ermöglicht der Antrieb vielfältige Einsatzmöglichkeiten.

## Patentansprüche

1. Getriebe, insbesondere verspannbares Getriebe, mit
- einem Hohlkörper (1),
- einer ersten Antriebswelle (3), die zumindest teilweise innerhalb des Hohlkörpers (1) angeordnet ist und mit dem Hohlkörper (1) in Wirkverbindung steht,
**gekennzeichnet durch**
eine zweite Antriebswelle (4), die zumindest teilweise innerhalb des Hohlkörpers (1) angeordnet ist und mit dem Hohlkörper (1) in Wirkverbindung steht.

2. Getriebe nach Anspruch 1, **dadurch gekennzeichnet, dass** zwischen mindestens einer der zwei Antriebswellen (3, 4) und dem Hohlkörper (1) mit Innenverzahnung (10) ein Zahnkranz mit radial beweglichen Zähnen (6, 7) angeordnet ist.

3. Getriebe nach Anspruch 2, **dadurch gekennzeichnet, dass** die radial beweglichen Zähne (6, 7) des Zahnkranzes durch eine mit einer der Antriebswellen (3, 4) fest verbundenen Führungseinrichtung (13, 14) bewegbar sind.

4. Getriebe nach Anspruch 2 oder 3, **dadurch gekennzeichnet, dass** beide Antriebswellen (3, 4) jeweils mit einem Zahnkranz mit beweglichen Zähnen (6, 7) verbunden sind, wobei beide Zahnkränze mit demselben Innenzahnkranz (10) des Hohlkörpers (1) in Eingriff sind.

5. Getriebe nach einem der Ansprüche 2 bis 4, **dadurch gekennzeichnet, dass** die Zähne (6, 7) in einem Zahnkäfig (5) radial beweglich angeordnet sind.

6. Getriebe nach einem der Ansprüche 2 bis 5, **dadurch gekennzeichnet, dass** die Zähne (6, 7) und/oder der Zahnkäfig (5) mit einer Abtriebswelle (2) für eine Drehmomentübertragung verbunden sind.

7. Getriebe nach einem der vorhergehenden Ansprüche, **dadurch gekennzeichnet, dass** die erste Antriebswelle (3) zumindest teilweise innerhalb der zweiten Antriebswelle (4) angeordnet ist.

8. Antrieb mit einem Getriebe nach einem der vorhergehenden Ansprüche, **dadurch gekennzeichnet, dass** die zwei Antriebswellen (3, 4) jeweils durch einen Motor angetrieben werden.

9. Antrieb nach Anspruch 8, **dadurch gekennzeichnet, dass** zumindest einer der Motoren zumindest teilweise innerhalb eines Umfangs des Hohlkörpers (1) angeordnet ist.

10. Antrieb nach Anspruch 8 oder 9, **dadurch gekennzeichnet, dass** zumindest einer der Motoren radial außerhalb des Hohlkörpers (1) angeordnet ist.

11. Antrieb nach einem der Ansprüche 8 bis 10, **gekennzeichnet durch** eine Steuereinheit (31), die mit den beiden Motoren verbunden ist und eingerichtet ist, um die Motoren in einem ersten Betriebsmodus unverspannt zu betrieben und in einem zweiten Betriebsmodus verspannt zu betreiben.

12. Verfahren zum Betreiben eines Antriebs nach Anspruch 10 oder 11, **gekennzeichnet durch** die Schritte:
Ansteuern der beiden Motoren, so dass sie unverspannt die beiden Antriebswellen (3, 4) antreiben in einem ersten Betriebsmodus; und
Ansteuern der beiden Motoren, so dass sie verspannt die beiden Antriebswellen (3, 4) antrieben in einem zweiten Betriebsmodus.
